**Europäisches Patentamt**

**European Patent Office**

**Office européen des brevets**

(19)

(11) Numéro de publication : **0 064 436**
**B1**

(12) # FASCICULE DE BREVET EUROPÉEN

(45) Date de publication du fascicule du brevet :
**25.07.84**

(51) Int. Cl.³ : **B 25 J   5/00**

(21) Numéro de dépôt : **82400672.0**

(22) Date de dépôt : **15.04.82**

(54) **Dispositif d'introduction ou d'extraction d'organe dans un générateur de vapeur.**

(30) Priorité : **17.04.81 FR 8107835**

(43) Date de publication de la demande :
**10.11.82 Bulletin 82/45**

(45) Mention de la délivrance du brevet :
**25.07.84 Bulletin 84/30**

(84) Etats contractants désignés :
**BE CH DE FR GB IT LI SE**

(56) Documents cités :
**EP-A- 0 014 616**
**EP-A- 0 020 272**

(73) Titulaire : **FRAMATOME ET CIE.**
**Tour Fiat 1, Place de la Coupole**
**F-92400 Courbevoie (FR)**

(72) Inventeur : **Coussau, Jean**
**1 rue Gossec**
**F-75012 Paris (FR)**
Inventeur : **Clar, Georges**
**4 avenue Verguin**
**F-69006 Lyon (FR)**

(74) Mandataire : **Bouget, Lucien et al**
**CREUSOT-LOIRE 15 rue Pasquier**
**F-75383 Paris Cedex 08 (FR)**

Jouve, 18, rue St-Denis, 75001 Paris, France

## Description

L'invention concerne un dispositif de mise en place et d'extraction d'un moyen de contrôle ou d'un outil dans un équipement récepteur en position de travail dans un milieu non accessible à un opérateur. Un tel dispositif selon le préambule de la revendication est divulgué par le document EP-A-0020272.

Dans le cas du contrôle ou des opérations d'usinage ou de réparations qui doivent être effectuées dans des endroits inaccessibles, on dispose d'équipement permettant d'effectuer ces contrôles, réparations ou usinages à distance.

Par exemple, dans le cas des réacteurs nucléaires à eau sous pression, on dispose d'équipements spéciaux pour effectuer des opérations de contrôle à l'intérieur des tubes ou dans la boîte à eau des générateurs de vapeur. Dans ce cas, il faut éviter qu'un opérateur intervienne directement à l'intérieur de la boîte à eau, puisque cette partie des générateurs de vapeur est en contact, lorsque le générateur est en service, avec l'eau du circuit primaire transportant des éléments radioactifs et reste elle-même radio-active.

On a donc recours à des dispositifs d'intervention à distance plus ou moins complexes qui requièrent néanmoins des interventions humaines en début ou même en cours d'opération.

De tels dispositifs comportent généralement un équipement destiné à recevoir l'outil ou le moyen de contrôle ou d'observation qu'on peut mettre en place sous la plaque tubulaire des générateurs de vapeur ou dont on peut modifier la position par rapport à la plaque tubulaire, en commandant ces opérations à distance.

Cependant, si l'on désire remplacer l'outil ou le dispositif de contrôle placé sur l'équipement récepteur en position de travail dans le milieu hostile, il n'est pas possible, avec les dispositifs connus actuellement, de réaliser cette opération à distance. Il est nécessaire de ramener l'équipement récepteur du moyen de contrôle ou de l'outillage dans une zone accessible pour effectuer le changement d'outils ou de moyen de contrôle.

Cette opération doit être effectuée sur équipement ayant séjourné en milieu radio-actif et d'autre part les opérations de démontage et de remontage de l'équipement peuvent être longues et délicates.

Le but de l'invention est donc de proposer un dispositif de mise en place et d'extraction d'un moyen de contrôle ou d'un outil dans un équipement récepteur en position de travail dans un milieu non accessible à un opérateur, permettant d'effectuer le remplacement du moyen de contrôle ou de l'outil sans avoir à sortir l'équipement récepteur du milieu hostile non accessible à l'opérateur.

Dans ce but, le dispositif suivant l'invention comporte :

— une piste de guidage et de déplacement constituée par une crémaillère en un matériau souple pouvant suivre un parcours non rectiligne, fixée en un point d'amarrage sur l'équipement de réception à l'une de ses extrémités et d'une longueur suffisante pour que son autre extrémité aboutisse en dehors du milieu non accessible,

— un chariot mobile sur la piste de guidage comportant un moteur et une roue dentée montée sur l'axe du moteur en engrénant avec la crémaillère,

— un fourreau de chargement solidaire du chariot, de forme tubulaire constituant à son extrémité avant, si l'on considère le déplacement du chariot vers l'équipement récepteur, une came d'actionnement sur sa surface externe, comportant sur sa surface interne, une gorge d'accrochage et portant une pièce de fermeture amovible obturant au moins partiellement l'alésage interne du fourreau à son extrémité arrière,

— un ensemble de support du moyen de contrôle muni de cliquets d'accrochage de cet ensemble de support sur le fourreau, au niveau de la gorge ménagée sur sa surface interne, dont la partie arrière peut être engagée dans le fourreau pour venir en appui sur la pièce de fermeture et dont la partie avant comporte des moyens d'accrochage complémentaires de moyen d'accrochage portés par l'équipement récepteur, la came ménagée sur le fourreau étant une came d'actionnement des moyens d'accrochage de l'ensemble de support sur l'équipement récepteur, cet actionnement dans le sens de l'ouverture et l'accrochage des cliquets de l'ensemble de support sur le fourreau étant provoqués par un mouvement vers l'avant du chariot, lorsque la pièce de fermeture du fourreau est dans une position hors service, alors que le transport et l'accrochage de l'ensemble de support sur l'équipement récepteur sont possibles également par un mouvement vers l'avant du chariot, lorsque la pièce de fermeture est en position de service dans le fourreau.

Afin de bien faire comprendre l'invention on va maintenant décrire à titre d'exemple non limitatif, en se référant aux figures jointes en annexe, un mode de réalisation d'un dispositif suivant l'invention utilisé pour le contrôle de tubes de générateurs de vapeur de réacteurs nucléaires à eau sous pression, en utilisant une sonde tournante à courant de Foucault.

La figure 1 représente une vue générale du dispositif et de son équipement récepteur en position à l'intérieur d'une boîte à eau d'un générateur de vapeur d'un réacteur nucléaire à eau sous pression.

La figure 2 représente une vue à plus grande échelle du dispositif au moment de la mise en place du moyen de contrôle sur son équipement récepteur.

La figure 3 représente une vue à grande échelle du moyen de contrôle et de son ensemble de support en position de travail sur l'équipement récepteur.

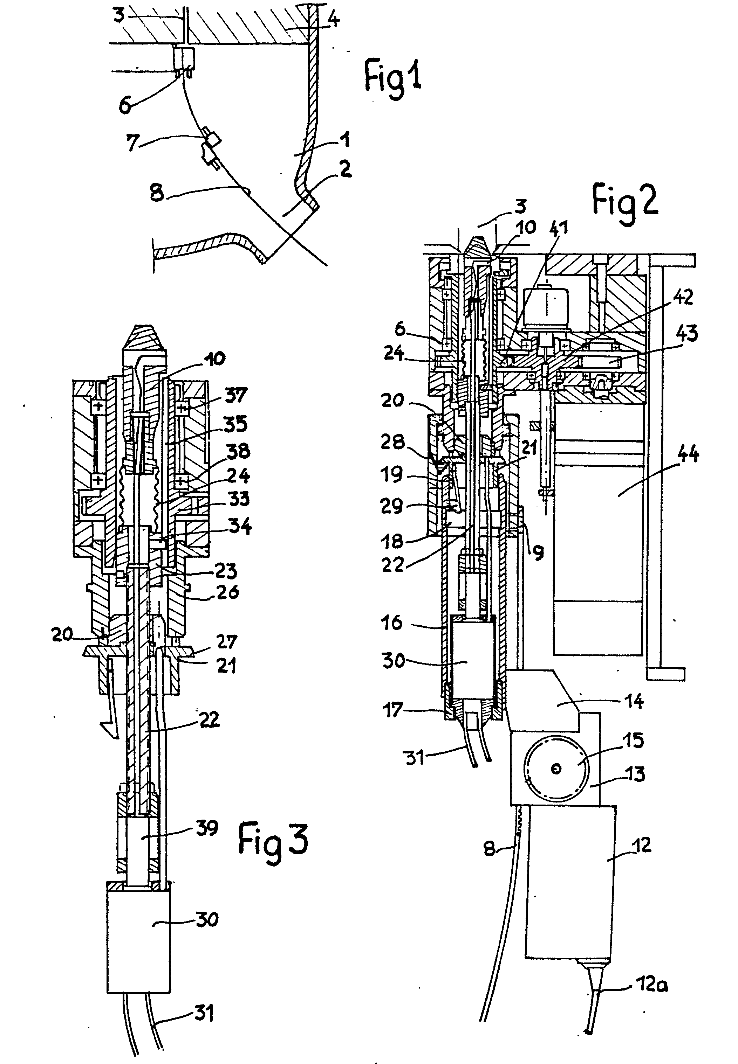

Sur la figure 1, on voit la boîte à eau 1 d'un générateur de vapeur nucléaire à eau sous pression comportant une ouverture 2 permettant le passage de l'instrumentation de contrôle du tube 3 traversant la plaque tubulaire 4 de forte épaisseur.

Un équipement récepteur 6 est fixé sous la plaque tubulaire de façon à permettre le contrôle d'un ou plusieurs tubes 3 grâce à une sonde à courant de Foucault portée par l'équipement récepteur 6.

Sur la figure 1, on voit d'autre part une piste de circulation du dispositif de mise en place et d'extraction 7 constituée par une crémaillère 8 en un matériau souple permettant un parcours non rectiligne, par exemple courbe, du dispositif 7 entre le poste de travail situé à l'extérieur du générateur de vapeur et l'équipement récepteur 6.

En se reportant à la figure 2, on voit que l'extrémité de la crémaillère 8 est fixée par des vis sur l'équipement récepteur 6 à son extrémité 9 située à l'intérieur du générateur de vapeur.

Le moyen de contrôle des tubes 3 du générateur de vapeur est constitué par une sonde à courant de Foucault 10 qui peut être extraite ou mise en place sur l'équipement récepteur 6 grâce au dispositif 7.

La partie mobile du dispositif de mise en place et d'extraction 7 est constituée par un moteur électrique 12, un ensemble de guidage et d'entraînement 13 et un support 14.

Le moteur 12 est alimenté par un conducteur souple 12a qui suit la partie mobile 7 du dispositif d'extraction dans ses déplacements.

L'ensemble de guidage et d'entraînement 13 comporte en particulier une roue dentée 15 engrénant avec la crémaillère 8 et entraînée par l'axe du moteur 12.

Le support 14 porte le fourreau 16 qui est partiellement obturé à son extrémité arrière par une bague 17 qui peut être vissée sur le fourreau, sur la partie arrière de celui-ci, si l'on considère le sens de déplacement de l'ensemble mobile 7 depuis l'extérieur du générateur de vapeur jusqu'à l'équipement récepteur 6.

Le fourreau 16 de forme tubulaire comporte également sur sa surface interne une rainure d'accrochage 18 et dans sa partie avant, sur sa surface externe, une partie profilée 19 constituant comme il sera décrit ultérieurement, une came d'actionnement.

L'ensemble mobile 7 portant le fourreau 16 éventuellement équipé de la bague 17 peut être déplacé sur la crémaillère 8 grâce au moteur 12 entraînant la roue dentée 15 engrénant avec la denture de cette crémaillère 8.

Sur la figure 2 on voit également l'outil 10 et son ensemble de support dans leur position de travail sur l'équipement récepteur 6, l'ensemble mobile de mise en place et d'extraction étant dans sa position extrême dans laquelle, il vient de réaliser l'accrochage de l'ensemble de support de la sonde 10 sur l'équipement récepteur 6.

L'ensemble de support de la sonde 10 comporte, ainsi qu'il est visible aux figures 2 et 3, un écrou 20 solidaire d'une bague de verrouillage 21, une vis 22 en prise avec la partie taraudée de l'écrou 20 et une pièce d'entraînement de la sonde 23 solidaire de la vis 22 à l'une de ses extrémités et reliée, par l'intermédiaire d'un organe élastique 24 tel qu'un soufflet, à la sonde 10.

L'écrou 20 présente une forme lui permettant d'être engagé à l'intérieur de la partie inférieure 26 de l'équipement récepteur de façon que cet écrou soit bloqué en rotation. Des broches d'arrêt permettent de réaliser ce blocage.

L'écrou 20 est solidaire de la bague de verrouillage 21 qui comporte une partie avant profilée 27 permettant son accrochage sur des cliquets 28 portés par l'équipement récepteur 6 et constitués par des lames élastiques portant à leur extrémité le cliquet lui-même sur lequel vient reposer la bague de verrouillage, lorsque le support de l'outil est fixé sur l'équipement récepteur comme représenté à la figure 2.

La bague de verrouillage porte également des cliquets 29 sur sa surface interne permettant un accrochage du support d'outil sur le fourreau, ainsi qu'il sera décrit ultérieurement.

La vis 22 est reliée à l'une de ses extrémités à un joint 30 permettant l'alimentation de la sonde et le recueil des informations grâce à un câble 31 relié à ce joint tournant. Les fils de mesure de la sonde passent dans l'alésage central de la vis 22 qui est creuse.

A son autre extrémité, la vis 22 est reliée à la pièce d'entraînement 23 qui est elle-même solidaire en rotation d'un équipage mobile 33 grâce à une clavette 34 mobile dans une rainure 35 ménagée dans l'équipage mobile 33 et permettant les mouvements de translation de la sonde par rapport à cet équipage mobile 33 monté rotatif grâce à des paliers 37 et 38 sur l'équipement récepteur 10.

La vis 22 comporte d'autre part un prolongement cylindrique lisse 39 qui peut se déplacer en translation à l'intérieur du joint 30, au cours des mouvements de la sonde 10.

L'équipage mobile 33 est entraîné en rotation, par l'intermédiaire d'un ensemble de pignons 41, 42 et 43, grâce à un moteur 44 fixé sur l'équipement récepteur.

Lorsque la sonde est en position sur l'équipement récepteur, comme représenté aux figures 2 et 3, la mise en rotation du moteur 44 entraîne la mise en rotation de l'équipage mobile 33, de la pièce d'entraînement 23 et de la vis 22 ce qui provoque également la mise en rotation de la sonde 10 en même temps qu'un mouvement de translation de celle-ci dans la direction verticale, l'écrou 20 dans lequel est engagée la vis 22 étant bloqué en rotation par la partie 26 de l'équipement récepteur 6.

La sonde décrit donc une hélice à l'intérieur du tube 3, ce qui permet de contrôler ce tube, sur une certaine longueur et sur toute sa périphérie. La longueur de déplacement de la sonde est limitée par la longueur de la rainure 35 ménagée dans la pièce 33 et par la longueur du prolongement 39 de la vis 22.

Le déplacement de l'équipement récepteur par rapport à la plaque tubulaire permet l'examen de chacun des tubes du générateur de vapeur successivement.

Lorsqu'on désire amener sur l'équipement récepteur une autre sonde, l'ensemble mobile 7 et le fourreau 16 étant à l'extérieur de l'enceinte, il faut d'abord effectuer l'extraction de la sonde 10. Il suffit pour cela de faire avancer l'ensemble mobile 7 par mise en fonctionnement du moteur 12, jusqu'à l'équipement récepteur, le fourreau venant de placer autour de la partie arrière du support de sonde, la dimension de cette partie constituée par le joint 30, le prolongement 39 de la vis 22 et une partie de cette vis 22 étant prévue pour permettre un engagement du fourreau.

Pour réaliser l'extraction d'une sonde ou d'un outillage sur l'équipement récepteur, la bague 17 fermant partiellement l'extrémité arrière du fourreau a été démontée ou placée en position reculée, ce qui permet d'avancer le fourreau vers l'équipement récepteur, au-delà de la position représentée sur la figure 2. En effet, la bague 17 étant démontée ou reculée, la partie arrière du support de sonde constituée par le joint 30 ne vient pas en butée sur cette bague 17.

Dans ce mouvement vers l'avant du fourreau, la partie 19 constituant une came vient en prise sur l'extrémité des cliquets 28 qui forment une rampe inclinée par rapport à la verticale. Ce mouvement permet de dégager les cliquets qui relâchent la bague de verrouillage 21. Celle-ci vient reposer sur l'extrémité avant du fourreau, cependant que les cliquets 29 viennent s'engager dans la rainure 18 prévue à l'intérieur du fourreau. Le support de sonde est alors accroché sur le fourreau et l'on peut ramener l'ensemble de support et la sonde vers le poste de travail en inversant le mouvement de l'ensemble mobile 7 entraîné par le moteur 12.

Pour introduire un nouvel outil ou une nouvelle sonde dans le générateur de vapeur et fixer ce nouvel outil sur l'équipement récepteur, il suffit de placer ce nouvel outil ou cette nouvelle sonde sur l'ensemble de support et de replacer la bague 17 sur l'extrémité arrière du fourreau.

Pour le transport de l'ensemble de support et de la sonde, cet ensemble de support repose par sa partie arrière sur la bague 17 comme représenté à la figure 2.

En fin de mouvement vers l'avant de l'ensemble de support, les parties profilées 27 de la bague de verrouillage viennent en contact avec les cliquets 28, manœuvrent ceux-ci et produisent l'accrochage de la bague de verrouillage sur ces cliquets comme représenté à la figure 2.

On peut alors ramener l'ensemble mobile 7 et le fourreau au poste de travail.

On voit ainsi qu'il est possible de réaliser le changement d'outil ou de sonde de contrôle à l'intérieur du générateur de vapeur, sans avoir à démonter l'équipement récepteur et sans intervention humaine à l'intérieur du générateur de vapeur.

D'autre part toutes les manœuvres sont réalisées de façon extrêmement sûre, grâce à des dispositifs d'accrochage et d'extraction uniquement mécaniques.

L'invention ne se limite pas au mode de réalisation qui vient d'être décrit.

C'est ainsi qu'on peut imaginer un ensemble de support de la sonde différent de celui qui a été décrit et qui permet de réaliser un mouvement hélicoïdal de la sonde à l'intérieur des tubes.

Le dispositif est également applicable dans le cas d'un outillage ou moyen de contrôle quelconque dont le mouvement à l'intérieur des tubes à contrôler peut être adapté aux besoins du contrôle ou de l'usinage à effectuer.

Enfin, le dispositif suivant l'invention s'applique dans tous les cas où l'on désire effectuer le remplacement d'un outil ou d'un moyen de contrôle dans un endroit inaccessible ou dans un milieu hostile, par exemple, à haute température ou exposé à des radiations.

## Revendications

1. Dispositif de mise en place et d'extraction d'un moyen de contrôle ou d'un outil (10) dans un équipement récepteur (6), en position de travail dans un milieu (1) non accessible à un opérateur, caractérisé par le fait qu'il comporte :

— une piste de guidage et de déplacement constituée par une crémaillère (8) en un matériau souple pouvant suivre un parcours non rectiligne, fixée en un point d'amarrage (9) sur l'équipement de réception (6) à l'une de ses extrémités et d'une longueur suffisante pour que son autre extrémité aboutisse en dehors du milieu non accessible,

— un chariot (7) mobile sur la piste de guidage (8) comportant un moteur (12) et une roue dentée (15) entraînée en rotation par le moteur et engrénant avec la crémaillère (8),

— un fourreau de chargement (16) solidaire du chariot (7), de forme tubulaire, constituant à son extrémité avant (19), si l'on considère le déplacement du chariot (7) vers l'équipement récepteur (6), une came d'actionnement sur sa surface externe, comportant sur sa surface interne une gorge d'accrochage (18) et portant une pièce de fermeture amovible (17) obturant au moins partiellement l'alésage interne du fourreau (16) à son extrémité arrière,

— un ensemble de support (20, 21, 22, 23) du moyen de contrôle muni de cliquets (29) d'accrochage de cet ensemble de support sur le fourreau (16) au niveau de la gorge (18) ménagée sur sa surface interne, dont la partie arrière peut être engagée dans le fourreau (16) pour venir en appui sur la pièce de fermeture (17) et dont la partie avant (27) comporte des moyens d'accrochage complémentaires de moyen d'accrochage (28) portés par l'équipement récepteur (6), la came (19) ménagée sur le fourreau (16) étant une came d'actionnement des moyens d'accrochage (28) de l'ensemble de support sur l'équipement récepteur (6), cet actionnement dans le sens de l'ouverture et l'accrochage des cliquets (19) de l'ensemble de support sur le fourreau (16) étant provoqués par un mouvement vers l'avant du chariot (7), lorsque la pièce de fermeture (17) du fourreau (16) est dans une position hors service, alors que le transport et l'accrochage de l'ensemble de support sur l'équipement récepteur (6) sont réalisés également par un mouvement du chariot (7) vers l'avant, lorsque la pièce de fermeture (17) est en position de service dans le fourreau (16).

2. Dispositif de mise en place et d'extraction suivant la revendication 1, caractérisé par le fait que l'ensemble de support comporte un écrou (20) ayant une forme permettant son engagement et son blocage en rotation dans l'équipement récepteur (6), une bague de verrouillage (21) solidaire de l'écrou (20) portant les moyens d'accrochage (29, 27) de l'ensemble de support sur le fourreau et sur l'équipement récepteur et une vis (22) engagée dans l'écrou (20) solidaire, à l'une de ses extrémités, de la partie arrière (30) de l'ensemble de support qui peut être engagée dans le fourreau (16) et à son autre extrémité d'une pièce d'entraînement (23) sur laquelle est fixé le moyen de contrôle ou l'outil (10), portant des moyens (34) permettant son entraînement en rotation par un équipage mobile (33) porté par l'équipement récepteur (6) et son déplacement en translation à l'intérieur de cet équipage mobile (33).

### Claims

1. A device for positioning and withdrawing a means of control of a tool (10) in a piece of receiving equipment (6), in a working position in a medium (1) inaccessible to an operator, characterised in that it comprises :

— a track for guidance and movement, formed by a rack (8) of a flexible material capable of following a non-rectilinear path, fixed at a mooring point (9) on the piece of receiving equipment (6) at one of its ends and having sufficient length for its other end to extend outside the inaccessible medium,

— a trolley (7), movable on the guidance track (8), comprising a motor (12) and a toothed wheel (15) driven in rotation by the motor and meshing with the rack (8),

— a loading sleeve (16) fixed integrally to the trolley (7), of tubular shape, forming at its forward end (19), considering the movement of the trolley (7) towards the piece of receiving equipment (6), an actuating cam on its outer surface, comprising a groove (18) for hooking on its inner surface and carrying a detachable closing part (17) blocking at least partially the inner bore of the sleeve (16) at its rear end,

— an assembly (20, 21, 22, 23) for supporting the means of control, equipped with ratchets (29) for hooking this supporting assembly on the sleeve (16) in the region of the groove (18) provided on its inner surface, whose rear part can be engaged in the sleeve (16) to bear on the closing part (17) and whose forward part (27) comprises means of hooking which are complementary to the means of hooking (28) carried by the piece of receiving equipment (6), the cam (19) provided on the sleeve (16) being a cam for actuating the means of hooking (28) the supporting assembly on the piece of receiving equipment (6), this actuation in the opening direction and the hooking of the ratchets (19) of the supporting assembly on the sleeve (16) being caused by a forward motion of the trolley (7), when the closing part (17) of the sleeve (16) is in an out-of-operation position, whilst the transport and the hooking of the supporting assembly on the piece of receiving equipment (6) are also produced by a forward motion of the trolley (7), when the closing part (17) is in an operating position in the sleeve (16).

2. A device for positioning and withdrawing accord ing to Claim 1, characterised in that the supporting assembly comprises a nut (20) having a shape permitting its engagement and its locking in rotation in the piece of receiving equipment (6), a bolting ring (21) fixed integrally to the nut (20) carrying the means for hooking (29, 27) the supporting assembly on the sleeve and on the piece of receiving equipment and a screw (22) engaged in the nut (20) fixed integrally, at one of its ends, to the rear part (30) of the supporting assembly, which screw can be engaged in the sleeve (16) and, at its other end, to a driving part (23) on which is fixed the means of control or the tool (10), carrying means (34) permitting it to be driven in rotation by a movable apparatus (33) carried by the piece of receiving equipment (6) and to be moved in translation inside this movable apparatus (33).

### Ansprüche

1. Vorrichtung zum Einsetzen und Herausnehmen eines Kontrollmittels oder Werkzeugs (10) in einer Aufnahmeeinrichtung (6), das sich in der Arbeitsstellung in einem dem Bedienungsmann nicht zugänglichen Milieu (1) befindet, dadurch gekennzeichnet, daß sie folgende Teile umfaßt :

— eine Führungs- und Fahrbahn mit einer eine nichtgeradlinige Strecke durchlaufbare Zahnstange (8) aus einem flexiblen Material, die mit einem Ende an einem Verankerungspunkt (9) an der Aufnahmeeinrichtung (6) befestigt ist und eine ausreichende Länge aufweist, daß sie mit ihrem anderen Ende aus dem nicht zugänglichen Milieu herausführt,

— ein auf der Führungsbahn (8) verfahrbarer Wagen (7) mit einem Motor (12) und einem über den Motor drehbeweglich angetriebenen, mit der Zahnstange (8) in Eingriff stehenden Zahnrad (15),

— ein rohrförmiger mit dem Wagen (7) fest verbundener Ladezylinder (16), dessen Vorderende (19), wenn man von der Bewegung des Wagens (7) zur Aufnahmeeinrichtung (6) hin ausgeht, als Betätigungsnocke auf dessen Aussenfläche ausgebildet ist, wobei dessen Innenfläche eine Einhängerille (18) aufweist, und der ein abnehmbares Verschließstück (17) trägt, das die Innenbohrung des Zylinders (16) an dessen hinteren Ende mindestens teilweise abdichtet,

— eine Trageinheit (20, 21, 22, 23) für das Kontrollmittel mit Klinken (29) zum Einhängen der Trageinheit in der auf der Innenfläche des Zylinders (16) angeordnete Rille (18), wobei deren hinteres Teil in den Zylinder (16) eingeführt werden kann um auf dem Verschließstück (17) zur Auflage zu kommen und deren Vorderteil (27) Einhängemittel aufweist, die den von der Aufnahmeeinrichtung (6) getragenen Einhängemittel (28) zugeordnet sind, wobei die auf dem Zylinder (16) angeordnete Nocke (19) eine Nocke zur Betätigung der Einhängemittel (28) der Trageinheit auf der Aufnahmeeinrichtung (6) ist, und wobei die Öffnungsbetatigung und das Einrasten der Klinken (19) der Trageinheit auf dem Zylinder (16) durch eine Vorwärtsbewegung des Wagens (7) bewirkt werden, wenn das Verschließstück (17) des Zylinders (16) sich in einer Außerbetriebsstellung befindet, während der Transport und das Einhängen der Trageinheit auf der Aufnahmeeinrichtung (6) ebenfalls durch eine Bewegung des Wagens (7) nach vorne erzielt werden, wenn das Verschließstück (17) sich in der Betriebsstellung in dem Zylinder (16) befindet.

2. Einsetz- und Herausnahmevorrichtung nach Anspruch 1, dadurch gekennzeichnet, daß die Trageinheit eine Mutter (20) aufweist, die derart ausgebildet ist, daß sie in die Aufnahmeeinrichtung (6) eingeführt und drehbeweglich festgestellt werden kann, sowie ein mit der Mutter (20) fest verbundener Verriegelungsring (21), der die Einhängemittel (29, 27) der Trageinheit auf dem Zylinder und auf der Aufnahmeeinrichtung aufweist, und eine in die Mutter (20) eingeführte Schraube (22), die an einem Ende mit dem in den Zylinder (16) einführbaren hinteren Teil (30) der Trageimheit fest verbunden ist und an seinem anderen Ende mit einem Antriebsteil (23) zusammengebaut ist, auf dem das Kontrollmittel oder Werkzeug (10) befestigt ist und Mittel (34) trägt, die dessen drehbeweglichen Antrieb über ein von der Aufnahmeeinrichtung (6) getragenes bewegliches Organ (33) und dessen Längsbewegung innen in diesem bewglichen Organ (33) ermöglichen.

0 064 436

Fig1

Fig2

Fig3

1